# EUROPÄISCHE PATENTANMELDUNG

(11) **EP 3 955 022 A1**
(43) Veröffentlichungstag der Anmeldung: **16.02.2022**
(21) Anmeldenummer: 20190700.3
(22) Anmeldetag: 12.08.2020
(51) Int. Cl.: G01S 7/481, G01S 17/931

(54) **SENSORANORDNUNG UND VERFAHREN ZU DEREN BETRIEB**

(71) Anmelder: Leuze electronic GmbH + Co. KG, 73277 Owen/Teck (DE)
(72) Erfinder: Ruff, Markus, 73734 Esslingen am Neckar (DE)
(74) Vertreter: Ruckh, Rainer Gerhard

(57) **Zusammenfassung**

Die Erfindung betrifft eine Sensoranordnung mit einem optischen Sensor (1), welcher eine Lichtstrahlen (6) emittierende Sende-/Empfangseinheit (5) und eine Ablenkeinheit (9), welche zur Ablenkung der Lichtstrahlen (6) ausgebildet ist, aufweist und mit einer Auswerteeinheit (10), in welcher abhängig von mit der Sende-/Empfangseinheit (5) generierten Sensorsignalen Objektfeststellungssignale generiert werden. Die Sende-/Empfangseinheit (5) und die Ablenkeinheit (9) sind ausgebildet Lichtstrahlen (6) innerhalb mehrerer räumlich versetzter Abtastflächen (4a - 4d) zu führen. Die Auswerteeinheit (10) ist für separate Objekterfassungen innerhalb der einzelnen Abtastflächen (4a - 4d) ausgebildet, wobei in der Auswerteeinheit (10) für eine Teilmenge der Abtastflächen (4a - 4d) eine sichere Auswertung durchgeführt wird und für die restlichen Abtastflächen (4a - 4d) eine nicht sichere Auswertung durchgeführt wird. Die Erfindung betrifft weiterhin ein entsprechendes Verfahren.

## Beschreibung

Die Erfindung betrifft eine Sensoranordnung und ein Verfahren zu deren Betrieb.

Derartige Sensoranordnungen umfassen typischerweise einen optischen Sensor in Form eines Flächendistanzsensors, das heißt eines scannenden Distanzsensors mit dem eine Bereichsüberwachung, insbesondere eine Gefahrenbereichsüberwachung durchgeführt wird.

Insbesondere können derartige Sensoranordnungen im Bereich der Sicherheitstechnik eingesetzt werden, wobei dann mit der Sensoranordnung eine Anlage gesichert wird, von welcher Gefahren für Personen ausgehen können. Wird mit dem optischen Sensor, insbesondere Flächendistanzsensor innerhalb eines Gefahrenbereichs ein Objekt detektiert, generiert der optische Sensor als Objektfeststellungssignal einen Abschaltbefehl für die Maschine.

Die Anlage kann von einer stationären Maschine gebildet sein, deren Gefahrenbereich mit dem Flächendistanzsensor überwacht wird.

Eine weitere Anwendung besteht in der Überwachung der Absicherung des Vorfeldes oder Umfeldes von Fahrzeugen, insbesondere fahrerlosen Transportfahrzeugen. Anhand von Objektdetektionen mittels des Flächendistanzsensors kann zum Beispiel eine Navigation eines fahrerlosen Transportfahrzeugs durchgeführt werden. Weiterhin kann der Flächendistanzsensor zur Kollisionsüberwachung an Fahrzeugen, insbesondere fahrerlose Transportfahrzeuge eingesetzt werden. Wird mit dem Flächendistanzsensor ein Objekt innerhalb eines Gefahrenbereichs detektiert, generiert der Flächendistanzsensor als Objektfeststellungssignal einen Abschaltbefehl, der zum Anhalten des Fahrzeugs führt, wodurch Gefährdungen für Personen vermieden werden.

Flächendistanzsensoren, die für derartige Sensoranordnungen eingesetzt werden, weisen als Sende-/Empfangseinheit einen Lichtstrahlen emittierenden Sender und einen Lichtstrahlen empfangenden Empfänger auf, welche einen Distanzsensor bilden. Zudem ist eine Ablenkeinheit in Form eines rotierenden Drehspiegels oder dergleichen vorgesehen, mittels derer die Lichtstrahlen periodisch innerhalb einer Abtastebene geführt werden. Innerhalb der mit den Lichtstrahlen abgetasteten Abtastebene kann ein Schutzfeld definiert werden, innerhalb dessen eine Gefahrenbereichsüberwachung durchgeführt wird.

Da mit dem Flächendistanzsensor Objekte nur innerhalb einer Abtastebene erfasst werden können, ist mit diesem nur eine eingeschränkte Überwachung möglich. Daher ist es oft, insbesondere bei der Vorfeldüberwachung von Fahrzeugen wie fahrerlosen Transportfahrzeugen, erforderlich, zusätzliche Sensoren wie Kameras einzusetzen. Dies führt jedoch zu einem unerwünscht hohen Konstruktions- und Kostenaufwand.

Der Erfindung liegt die Aufgabe zugrunde eine Sensoranordnung bereitzustellen, welche bei geringem konstruktiven Aufwand eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Die Erfindung betrifft eine Sensoranordnung mit einem optischen Sensor, welcher eine Lichtstrahlen emittierende Sende-/Empfangseinheit und eine Ablenkeinheit, welche zur Ablenkung der Lichtstrahlen ausgebildet ist, aufweist und mit einer Auswerteeinheit, in welcher abhängig von mit der Sende-/Empfangseinheit generierten Sensorsignalen Objektfeststellungssignale generiert werden. Die Sende-/Empfangseinheit und die Ablenkeinheit sind ausgebildet Lichtstrahlen innerhalb mehrerer räumlich versetzter Abtastflächen zu führen. Die Auswerteeinheit ist für separate Objekterfassungen innerhalb der einzelnen Abtastflächen ausgebildet, wobei in der Auswerteeinheit für eine Teilmenge der Abtastflächen eine sichere Auswertung durchgeführt wird und für die restlichen Abtastflächen eine nicht sichere Auswertung durchgeführt wird.

Die Erfindung betrifft weiterhin ein entsprechendes Verfahren.

Ein wesentlicher Aspekt der Erfindung besteht darin, dass mit dem optischen Sensor eine Objektdetektion innerhalb mehrerer räumlich versetzter Abtastflächen durchgeführt wird. Im Gegensatz zu bekannten optischen Sensoren wie zum Beispiel Flächendistanzsensoren weist der erfindungsgemäße optische Sensor keine Ablenkeinheit auf, mit der die Lichtstrahlen der Sende-/Empfangseinheit in nur einer Abtastebene geführt werden. Vielmehr sind die Sende-/Empfangseinheit und Ablenkeinheit des erfindungsgemäßen optischen Sensors so ausgebildet, dass mehrere räumlich versetzte Abtastflächen abgetastet werden, so dass die Funktionalität des optischen Sensors auf eine dreidimensionale Überwachungsfunktion erweitert ist.

Im Unterschied zu Kamerasystemen, mittels derer ein zusammenhängender dreidimensionaler Bereich erfasst wird, bildet der optische Sensor der erfindungsgemäßen Sensoranordnung ein scannendes System mittels derer eine selektive Objekterfassung innerhalb mehrerer räumlich versetzter, diskreter Abtastflächen erfolgt, wobei diese vorteilhaft aber nicht zwingend als Abtastebenen ausgebildet sind. Vielmehr können auch, je nach Ausbildung des optischen Sensors und insbesondere dessen Ablenkeinheit auch gekrümmte Abtastflächen abgetastet werden.

Ein wesentlicher Vorteil der erfindungsgemäßen Sensoranordnung besteht dabei darin, dass für die einzelnen Abtastflächen verschiedene Funktionalitäten, insbesondere verschiedene Überwachungsfunktionalitäten realisiert werden. Dabei ist erfindungsgemäß vorgesehen, dass nur für einen Teil der Abtastflächen eine sichere Auswertung durchgeführt wird, während für die restlichen Abtastflächen eine nicht sichere Auswertung durchgeführt wird.

Vorteilhaft weist hierzu die Auswerteeinheit einen fehlersicheren Aufbau auf, der beispielsweise durch zwei sich zyklisch überwachende Rechnereinheiten realisiert werden kann.

Dabei kann die Auswerteeinheit im optischen Sensor integriert sein oder von einer externen Steuerung gebildet sein.

Bei der erfindungsgemäßen Sensoranordnung wird vorteilhaft bei einer sicheren Auswertung für eine Abtastfläche ein sicheres Objektfeststellungssignal generiert.

Insbesondere bildet das sichere Objektfeststellungssignal einen Abschaltbefehl für eine gefahrbringende Anlage aus.

Dabei wird der Abschaltbefehl dann generiert, wenn mittels des optischen Sensors in diesen Abtastflächen ein Objekt detektiert wird. Durch den Abschaltbefehl für die Anlage, die als stationäre Maschine oder als Fahrzeug, insbesondere fahrerloses Transportfahrzeug ausgebildet sein kann, werden Gefährdungen für Personen vermieden.

Zweckmäßig wird das sichere Objektfeststellungssignal über eine sichere Ausgangsstruktur des optischen Sensors ausgegeben.

Die sichere Ausgangsstruktur kann insbesondere von einem fehlersicheren, insbesondere zweikanaligen Ausgang, einem sogenannten OSSD, gebildet sein. Weiterhin kann die sichere Ausgangsstruktur von einem sicheren Feldbussystem wie zum Beispiel Profisafe oder FSOE gebildet sein.

Für eine Abtastfläche, für die eine nicht sichere Auswertung durchgeführt werden kann, kann in der Auswerteeinheit eine vereinfachte nicht fehlersichere Auswertung von Sensorsignalen der Sende-/Empfangseinheit durchgeführt werden.

Bei der nicht sicheren Auswertung können generell nicht sichere Objektfeststellungssignale generiert werden. Diese können beispielsweise als Vorwarnmeldungen genutzt werden, die anzeigen ob sich ein Objekt einem Gefahrenbereich, nämlich einer Abtastfläche, in welcher eine sichere Auswertung erfolgt, nähert.

Weiterhin können bei der nicht sicheren Auswertung Messdaten wie Geometrie-und Lagedaten von Objekten bestimmt werden. Derartige Messdaten können dann, wenn mit der Sensoranordnung das Umfeld eines Fahrzeugs, insbesondere eines fahrerlosen Transportfahrzeugs überwacht wird, zu Navigationszwecken genutzt werden.

Im einfachsten Fall erfolgt nur für eine Abtastfläche eine sichere Auswertung, indem ein sicheres Objektfeststellungssignal generiert wird. Dann erfolgt in allen anderen Abtastflächen eine nicht sichere Auswertung.

Alternativ ist die Funktion der Sensoranordnung derart ausgebildet, dass für mehrere Abtastflächen eine sichere Auswertung erfolgt, und dass für jede Abtastfläche ein sicheres Objektfeststellungssignal generiert wird, oder dass für alle oder wenigstens eine Gruppe von Abtastflächen ein gemeinsames sicheres Objektfeststellungssignal generiert wird.

Wird für alle Abtastflächen, in welchen eine sichere Auswertung durchgeführt wird, nur ein gemeinsames sicheres Objektfeststellungssignal generiert, wird mit dem optischen Sensor nur eine Schutzfunktion generiert.

Werden für unterschiedliche Abtastflächen oder Gruppen von Abtastflächen einzelne, voneinander unabhängige sichere Objektfeststellungssignale generiert, werden mit dem optischen Sensor mehrere unterschiedliche Schutzfunktionen realisiert, beispielsweise, dass mehrere Anlagen oder unterschiedliche Teile von Anlagen überwacht werden.

Gemäß einer vorteilhaften Ausführungsform weist der optische Sensor eine Schnittstelle auf, über welche Signale zur Vorgabe von Abtastflächen, für welche eine sichere Auswertung erfolgt, vorgebbar sind.

Damit können insbesondere Art und Umfang der mit der Sensoranordnung bereitgestellten Sicherheitsfunktionen einfach und schnell verändert werden und an sich ändernde Randbedingungen angepasst werden.

Die Führung der Lichtstrahlen der Sensoranordnung in mehreren diskreten Abtastflächen kann auf unterschiedliche Weise realisiert sein.

Gemäß einer ersten Variante weist die Sende-/Empfangseinheit wenigstens einen Lichtstrahlen emittierenden Sender auf, welchem als Ablenkeinheit ein Rotations- und Schwenkbewegungen durchführendes Ablenkelement zugeordnet ist.

Im einfachsten Fall weist eine solche Ablenkeinheit einen Umlenkspiegel auf, der nicht nur um eine Drehachse gedreht sondern auch um eine weitere Achse geschwenkt werden kann.

Gemäß einer zweiten Variante weist die Sende-/Empfangseinheit wenigstens einen Lichtstrahlen emittierenden Sender auf, welchem als Ablenkeinheit ein erstes Rotationsbewegungen durchführendes Ablenkelement und ein zweites Schwenkbewegungen durchführendes Ablenkelement zugeordnet sind.

Das Rotationsbewegungen durchführende Ablenkelement kann von einem Drehspiegel oder einem Polygonspiegelrad gebildet sein, das Schwenkbewegungen durchführende Element kann von einem Schwenkspiegel gebildet sein. Gemäß einer weiteren Variante weist die Sende-/Empfangseinheit wenigstens einen rotierend gelagerten Lichtstrahlen emittierenden Sender auf, welchem ein Schwenkbewegungen durchführendes Ablenkelement zugeordnet ist. Die Sende-/Empfangseinheit kann beispielsweise in einem rotierenden Messkopf gelagert sein.

Gemäß einer weiteren Variante weist die Sende-/Empfangseinheit mehrere in Abstand angeordnete Sender auf, deren Lichtstrahlen räumlich versetzt zueinander verlaufen, und die Sender rotierend gelagert sind, und/oder den Sendern ein Rotationsbewegungen durchführendes Ablenkelement zugeordnet ist.

Durch die Mehrfachanordnung von Sendern werden besonders einfach und insbesondere ohne Schwenkbewegungen durchführende Ablenkelemente einsetzten zu müssen, verschiedene Abtastflächen generiert, wobei sich Form und Umfang der Abtastflächen durch die Rotationsbewegung der Sender oder die Umlenkcharakteristik des Rotationsbewegungen durchführende Ablenkelement ergibt.

Besonders vorteilhaft ist die Anzahl von Abtastflächen und/oder die räumliche Orientierung von Abtastflächen durch eine Bewegungssteuerung von Abtastflächen oder eine Aktivierung und Deaktivierung einzelner Sender und/oder Empfänger veränderbar.

Dabei ist zweckmäßig, dass die Anzahl von Abtastflächen und/oder die räumliche Orientierung von Abtastflächen durch Einlesen von Steuersignalen vorgebbar ist.

Damit kann schnell und flexibel, insbesondere noch während des Betriebs der Sensoranordnung die Abtastcharakteristik geändert und an sich ändernde Randbedingungen angepasst werden.

Generell ist dem oder den Sendern wenigstens ein Empfänger zugeordnet.

Vorteilhaft ist bei einer Mehrfachanordnung von Sendern jedem Sender ein Empfänger zugeordnet.

Gemäß einer vorteilhaften Ausgestaltung ist die Sende-/Empfangseinheit zur Durchführung von Distanzmessungen ausgebildet.

Ein Sender und dessen zugeordneter Empfänger bilden dann einen Distanzsensor, wobei die Distanzmessungen vorteilhaft nach einem Impuls-Laufzeit-Verfahren oder Phasenmessverfahren erfolgen. Durch eine zusätzliche Bestimmung der Ablenkpositionen der Lichtstrahlen ist eine Positionsbestimmung von Objekten möglich.

Die Erfindung wird im Folgenden anhand der Zeichnungen erläutert. Es zeigen:
- Figur 1:: Beispiel der erfindungsgemäßen Sensoranordnung mit einem an einem fahrerlosen Transportfahrzeug angeordneten optischen Sensor.
- Figur 2:: Schematische Darstellung eines Ausführungsbeispiels des optischen Sensors gemäß Figur 1.
- Figur 3:: Erstes Beispiel einer Ablenkeinheit für den optischen Sensor gemäß Figur 2.
- Figur 4:: Zweites Beispiel einer Ablenkeinheit für den optischen Sensor gemäß Figur 2.
- Figur 5:: Drittes Beispiel einer Ablenkeinheit für den optischen Sensor gemäß Figur 2.
- Figur 6:: Viertes Beispiel einer Ablenkeinheit für den optischen Sensor gemäß Figur 2.

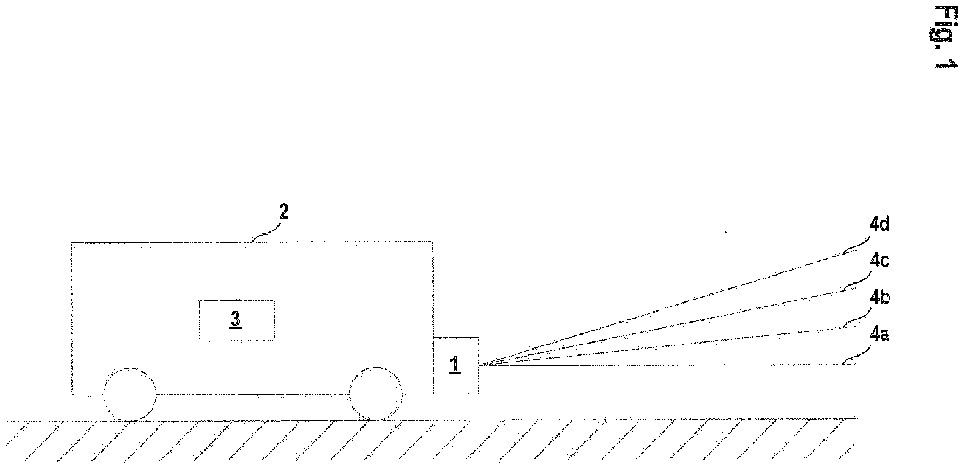

Figur 1 zeigt schematisch ein Ausführungsbeispiel der erfindungsgemäßen Sensoranordnung. Die Sensoranordnung umfasst einen optischen Sensor 1, der an der Frontseite eines fahrerlosen Transportfahrzeugs 2 angeordnet ist. Das fahrerlose Transportfahrzeug 2 wird von einer Steuerung 3 gesteuert. Mit dem optischen Sensor 1 erfolgt eine Vorfeldüberwachung des fahrerlosen Transportfahrzeugs 2 derart, dass eine Objekterfassung in mehreren diskreten, räumlich zueinander versetzten Abtastflächen 4a - 4d erfolgt. Im vorliegenden Fall sind vier Abtastflächen 4a - 4d dargestellt, wobei dies keinesfalls zwingend ist. Die Abtastflächen 4a - 4d sind im vorliegenden Fall als Abtastebene ausgebildet.

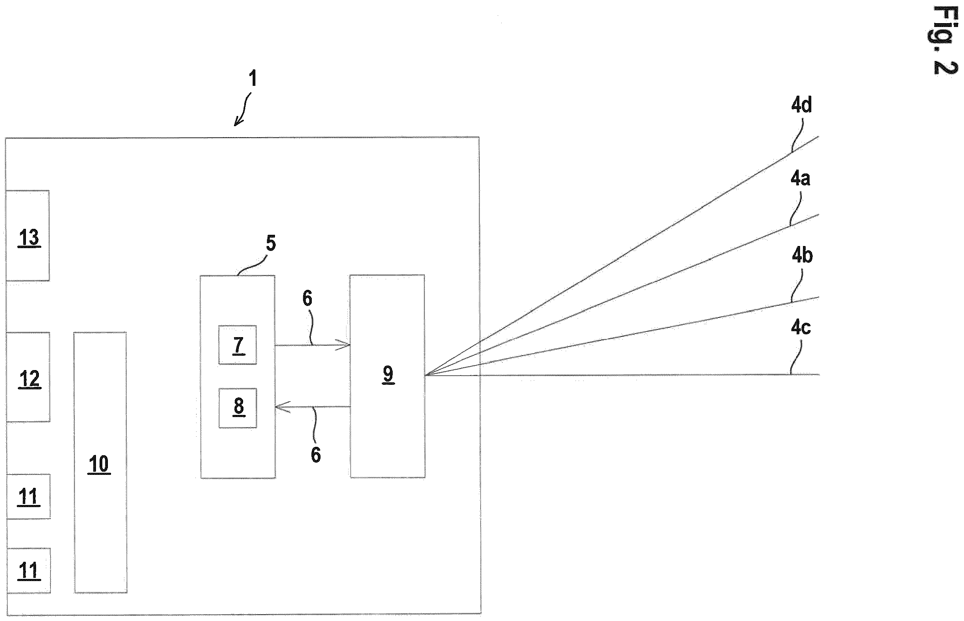

Figur 2 zeigt ein Ausführungsbeispiel des optischen Sensors 1. Der optische Sensor 1 weist eine Sende-/Empfangseinheit 5 auf, die im vorliegenden Fall einen Lichtstrahlen 6 emittierenden Sender 7 und einen Lichtstrahlen 6 empfangenden Empfänger 8 aufweist, die einen nach einem Impuls-Laufzeit-Verfahren arbeitenden Distanzsensor ausbilden.

Der Sende-/Empfangseinheit 5 ist eine Ablenkeinheit 9 zugeordnet, mittels derer eine Ablenkung der Lichtstrahlen 6 derart erfolgt, dass diese periodisch die einzelnen Abtastflächen 4a - 4d überstreichen.

Weiterhin weist der optische Sensor 1 eine Auswerteeinheit 10 auf, in der in der Sende-/Empfangseinheit 5 generierte Sensorsignale ausgewertet werden. Die Auswerteeinheit 10 weist einen redundanten Aufbau in Form zweier sich zyklisch überwachender Rechnereinheiten auf. Alternativ kann die Auswertung der Sensorsignale auch in der Steuerung 3 des fahrerlosen Transportfahrzeugs 2 erfolgen. Die Steuerung 3 ist zweckmäßig als Sicherheitssteuerung ausgebildet, das heißt sie weist einen fehlersicheren, redundanten Aufbau auf.

An die Auswerteeinheit 10 angeschlossen sind mehrere fehlersichere Ausgänge 11, insbesondere in Form zweikanaliger OSSD, wenigstens ein nicht sicherer Ausgang 12 und eine Schnittstelle 13, über welchen Daten in den optischen Sensor 1 eingelesen werden können. In Figur 2 sind nur exemplarisch zwei der sicheren Ausgänge 11 dargestellt. Anstelle der sicheren Ausgänge 11 kann auch ein sicheres Feldbussystem wie Profisafe oder FSOE vorgesehen sein.

Erfindungsgemäß erfolgt in der Auswerteeinheit 10 für eine Teilmenge der Abtastflächen 4a - 4d eine sichere Auswertung und für die übrigen Abtastflächen 4a - 4d eine nicht sichere Auswertung.

Bei einer sicheren Auswertung wird in der Auswerteeinheit 10 ein sicheres Objektfeststellungssignal in Form eines binären Schaltsignals generiert, dessen Schaltzustände angeben ob sich ein Objekt in jeweiligen Abtastflächen 4a - 4d befindet oder nicht. Wird ein Objekt in Abtastflächen 4a - 4d detektiert, bildet das Objektfeststellungssignal einen Anhaltbefahl mit dem das fahrerlose Transportfahrzeug 2 angehalten wird.

Die Auswertung kann auch derart modifiziert werden, dass nur abhängig von einer Objektdetektion in einem Schutzfeld innerhalb der Abtastflächen 4a - 4d das sichere Objektfeststellungssignal generiert wird.

Im einfachsten Fall erfolgt für nur eine Abtastfläche 4a - 4d eine sichere Auswertung. Das entsprechende sichere Objektfeststellungssignal wird über einen sicheren Ausgang 11 ausgegeben.

Generell ist es auch möglich, dass für mehrere Abtastflächen 4a - 4d eine sichere Auswertung erfolgt. Dann kann für jedes dieser Abtastflächen 4a - 4d ein sicheres Objektfeststellungssignal generiert und über einen sicheren Ausgang 11 ausgegeben werden. Generell ist es möglich alle oder Gruppen von Abtastflächen 4a - 4d, in denen eine sichere Auswertung erfolgt, zusammenzufassen und für diese ein gemeinsames sicheres Objektfeststellungssignal zu erzeugen, das dann über einen sicheren Ausgang ausgegeben wird. Dann wird ein Abschaltbefehl dann generiert, wenn in wenigstens einem der zusammengefassten Abtastflächen 4a - 4d ein Objekt detektiert wird.

Eine nicht sichere Auswertung für eine Abtastfläche 4a - 4d ist derart ausgebildet, dass mit dieser nicht sicherheitsrelevante Objektdetektionen erfolgen. Beispielsweise werden Geometriedaten und Lagedaten von Objekten erfasst, die zur Navigation des fahrerlosen Transportfahrzeugs 2 verwendet werden können. Die entsprechenden Messdaten werden über den nicht sicheren Ausgang 12 ausgegeben.

Über die Schnittstelle 13 können von einer externen Einheit, insbesondere auch von der Steuerung 3 des fahrerlosen Transportfahrzeugs 2, Signale in den optischen Sensor 1 eingelesen werden, mittels derer vorgegeben wird, für welche Abtastfläche 4a - 4d eine sichere Auswertung erfolgen soll. Auch kann angegeben werden ob für diese einzeln oder gemeinsam in frei wählbaren Gruppen ein sicheres Objektfeststellungssignal generiert wird.

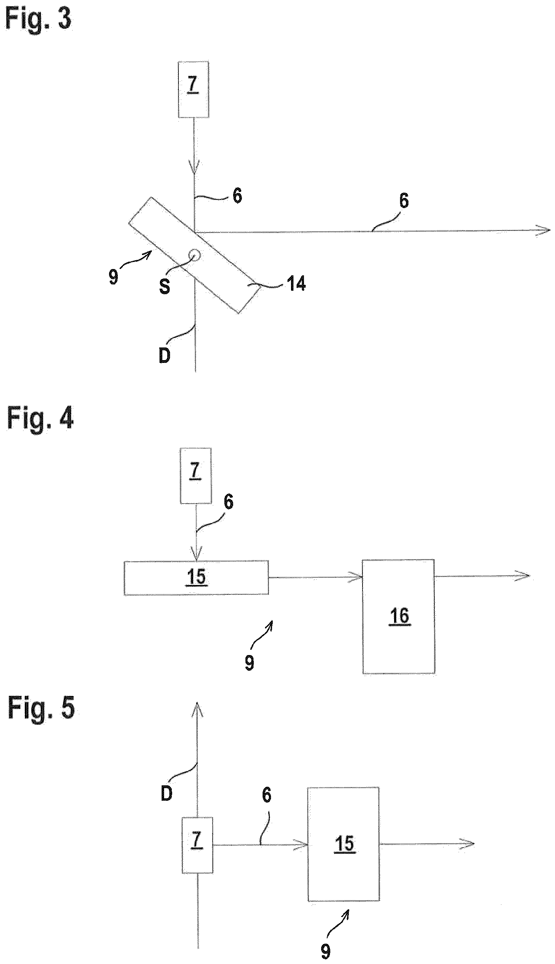

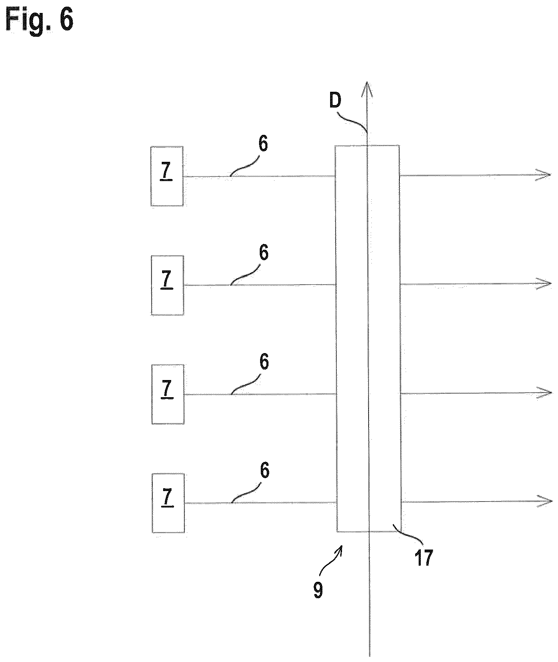

Die Figuren 3 bis 6 zeigen unterschiedliche Ausführungsformen von Ablenkeinheiten 9 für den optischen Sensor 1 gemäß Figur 2. Bei den Ausführungsformen der Figuren 3 bis 5 weist die Sende-/Empfangseinheit 5 jeweils nur einen Sender 7 auf, dem ein nicht dargestellter Empfänger 8 zugeordnet ist. Bei der Ausführungsform gemäß Figur 6 sind mehrere Sender 7 vorgesehen, welchen jeweils ein nicht dargestellter Empfänger 8 zugeordnet ist.

Bei der Ausführungsform gemäß Figur 3 weist die Ablenkeinheit 9 einen Umlenkspiegel 14 zur Ablenkung der Lichtstrahlen 6 des Senders 7 auf. Der Umlenkspiegel 14 ist um eine Drehachse D drehbar, wodurch die Lichtstrahlen 6 periodisch innerhalb einer Abtastfläche 4a - 4d geführt werden. Zudem ist der Umlenkspiegel 14 um eine senkrecht zur Drehachse D verlaufende Schwenkachse S schwenkbar, wodurch unterschiedliche Abtastflächen 4a - 4d vorgegeben werden können.

Bei der Ausführungsform gemäß Figur 4 weist die Ablenkeinheit 9 ein separates Schwenkbewegungen durchführendes Ablenkelement auf, das von einem Schwenkspiegel 15 gebildet sein kann. Damit werden unterschiedliche Abtastflächen 4a - 4d vorgegeben. Weiterhin weist die Ablenkeinheit 9 ein Rotationsbewegungen durchführendes Ablenkelement wie einen rotierenden Drehspiegel 16 auf. Damit werden die Lichtstrahlen 6 des Senders 7 innerhalb einer Abtastfläche 4a - 4d geführt.

Bei der Ausführungsform gemäß Figur 5 ist der Sender 7 in einem rotierenden Messkopf gelagert, der sich um eine Drehachse D dreht, wodurch eine Ablenkung der Lichtstrahlen 6 innerhalb einer Abtastfläche 4a - 4d realisiert wird. Mit dem Sender 7 mitrotierend ist ein Schenkspiegel 15 vorgesehen, mittels dessen unterschiedliche Abtastflächen 4a - 4d eingestellt werden.

Durch eine Steuerung der Bewegung der Ablenkelemente der Ablenkeinheit 9, insbesondere durch ein Stoppen, Verlangsamen oder Beschleunigen der Bewegungen der Ablenkelemente können die Anzahl von Abtastflächen 4a - 4d sowie die Winkel zwischen den Abtastflächen 4a - 4d vorgegeben werden. Auch durch die Steuerung des Sendebetriebs kann die Vorgabe der Abtastflächen 4a - 4d beeinflusst werden. Die Vorgabe von Abtastflächen 4a - 4d kann durch ein über die Schnittstelle 13 eingelesenes Steuersignal vorgegeben werden.

Bei der Ausführungsform gemäß Figur 6 sind mehrere Sender 7 vorgesehen, die in vertikaler Richtung in Abstand hintereinander angeordnet sind. Den Sendern 7 ist ein Rotationsbewegungen durchführendes Ablenkelement nachgeordnet, das im vorliegenden Fall von einem Polygonspiegelrad 17 gebildet ist, welches um eine Drehachse D drehbar ist. Durch das Polygonspiegelrad 17 werden die Lichtstrahlen 6 periodisch innerhalb einer Abtastfläche 4a - 4d geführt. Durch selektives Aktivieren einzelner Sender 7, insbesondere über das Steuersignal, das über die Schnittstelle 13 eingelesen wird, können unterschiedliche Abtastflächen 4a - 4d aktiviert werden.

Leuze electronic GmbH + Co. KG 73277 Owen/Teck

### Bezugszeichenliste

- (1): Optischer Sensor
- (2): Fahrerloses Transportfahrzeug
- (3): Steuerung
- (4a - d): Abtastfläche
- (5): Sende-/Empfangseinheit
- (6): Lichtstrahlen
- (7): Sender
- (8): Empfänger
- (9): Ablenkeinheit
- (10): Auswerteeinheit
- (11): Ausgang
- (12): Ausgang
- (13): Schnittstelle
- (14): Umlenkspiegel
- (15): Schwenkspiegel
- (16): Drehspiegel
- (17): Polygonspiegelrad

- D: Drehachse
- S: Schwenkachse

## Patentansprüche

1. Sensoranordnung mit einem optischen Sensor (1), welcher eine Lichtstrahlen (6) emittierende Sende-/Empfangseinheit (5) und eine Ablenkeinheit (9), welche zur Ablenkung der Lichtstrahlen (6) ausgebildet ist, aufweist und mit einer Auswerteeinheit (10), in welcher abhängig von mit der Sende-/Empfangseinheit (5) generierten Sensorsignalen Objektfeststellungssignale generiert werden, **dadurch gekennzeichnet, dass** die Sende-/Empfangseinheit (5) und die Ablenkeinheit (9) ausgebildet sind Lichtstrahlen (6) innerhalb mehrerer räumlich versetzter Abtastflächen (4a - 4d) zu führen, dass die Auswerteeinheit (10) für separate Objekterfassungen innerhalb der einzelnen Abtastflächen (4a - 4d) ausgebildet ist, wobei in der Auswerteeinheit (10) für eine Teilmenge der Abtastflächen (4a - 4d) eine sichere Auswertung durchgeführt wird und für die restlichen Abtastflächen (4a - 4d) eine nicht sichere Auswertung durchgeführt wird.

2. Sensoranordnung nach Anspruch 1, **dadurch gekennzeichnet, dass** die Abtastflächen (4a - 4d) als Abtastebenen ausgebildet sind.

3. Sensoranordnung nach einem der Ansprüche 1 oder 2, **dadurch gekennzeichnet, dass** die Sende-/Empfangseinheit (5) wenigstens einen Lichtstrahlen (6) emittierenden Sender (7) aufweist, welchem als Ablenkeinheit (9) ein Rotations- und Schwenkbewegungen durchführendes Ablenkelement zugeordnet ist.

4. Sensoranordnung nach einem der Ansprüche 1 oder 2, **dadurch gekennzeichnet, dass** die Sende-/Empfangseinheit (5) wenigstens einen Lichtstrahlen (6) emittierenden Sender (7) aufweist, welchem als Ablenkeinheit (9) ein erstes Rotationsbewegungen durchführendes Ablenkelement und ein zweites Schwenkbewegungen durchführendes Ablenkelement zugeordnet sind.

5. Sensoranordnung nach einem der Ansprüche 1 oder 2, **dadurch gekennzeichnet, dass** die Sende-/Empfangseinheit (5) wenigstens einen rotierend gelagerten Lichtstrahlen (6) emittierenden Sender (7) aufweist, welchem ein Schwenkbewegungen durchführendes Ablenkelement zugeordnet ist.

6. Sensoranordnung nach einem der Ansprüche 1 oder 2, **dadurch gekennzeichnet, dass** die Sende-/Empfangseinheit (5) mehrere in Abstand angeordnete Sender (7) aufweist, deren Lichtstrahlen (6) räumlich versetzt zueinander verlaufen, und dass die Sender (7) rotierend gelagert sind, und/ oder dass den Sendern (7) ein Rotationsbewegungen durchführendes Ablenkelement zugeordnet ist.

7. Sensoranordnung nach einem der Ansprüche 3 bis 6, **dadurch gekennzeichnet, dass** dem oder den Sendern (7) wenigstens ein Empfänger (8) zugeordnet ist.

8. Sensoranordnung nach Anspruch 7, **dadurch gekennzeichnet, dass** bei einer Mehrfachanordnung von Sendern (7) jedem Sender (7) ein Empfänger (8) zugeordnet ist.

9. Sensoranordnung nach einem der Ansprüche 1 bis 8, **dadurch gekennzeichnet, dass** die Sende-/Empfangseinheit (5) zur Durchführung von Distanzmessungen ausgebildet ist.

10. Sensoranordnung nach einem der Ansprüche 3 bis 9, **dadurch gekennzeichnet, dass** die Anzahl von Abtastflächen (4a - 4d) und/oder die räumliche Orientierung von Abtastflächen (4a - 4d) durch eine Bewegungssteuerung von Abtastflächen (4a - 4d) oder eine Aktivierung und Deaktivierung einzelner Sender (7) und/oder Empfänger (8) veränderbar ist.

11. Sensoranordnung nach Anspruch 10, **dadurch gekennzeichnet, dass** die Anzahl von Abtastflächen (4a - 4d) und/oder die räumliche Orientierung von Abtastflächen (4a - 4d) durch Einlesen von Steuersignalen vorgebbar ist.

12. Sensoranordnung nach einem der Ansprüche 1 bis 11, **dadurch gekennzeichnet, dass** bei einer sicheren Auswertung für eine Abtastfläche (4a - 4d) ein sicheres Objektfeststellungssignal generiert wird.

13. Sensoranordnung nach Anspruch 12, **dadurch gekennzeichnet, dass** das sichere Objektfeststellungssignal einen Abschaltbefehl für eine gefahrbringende Anlage ausbildet.

14. Sensoranordnung nach einem der Ansprüche 12 oder 13, **dadurch gekennzeichnet, dass** das sichere Objektfeststellungssignal über eine sichere Ausgangsstruktur des optischen Sensors (1) ausgegeben wird.

15. Sensoranordnung nach einem der Ansprüche 12 bis 14, **dadurch gekennzeichnet, dass** nur für eine Abtastfläche (4a - 4d) eine sichere Auswertung erfolgt, indem ein sicheres Objektfeststellungssignal generiert wird.

16. Sensoranordnung nach einem der Ansprüche 12 bis 14, **dadurch gekennzeichnet, dass** für mehrere Abtastflächen (4a - 4d) eine sichere Auswertung erfolgt, und dass für jede Abtastfläche (4a - 4d) ein sicheres Objektfeststellungssignal generiert wird, oder dass für alle oder wenigstens eine Gruppe von Abtastflächen (4a - 4d) ein gemeinsames sicheres Objektfeststellungssignal generiert wird.

17. Sensoranordnung nach einem der Ansprüche 1 bis 16, **dadurch gekennzeichnet, dass** der optische Sensor (1) eine Schnittstelle (13) aufweist, über welche Signale zur Vorgabe von Abtastflächen (4a - 4d), für welche eine sichere Auswertung erfolgt, vorgebbar sind.

18. Sensoranordnung nach einem der Ansprüche 1 bis 17, **dadurch gekennzeichnet, dass** die Auswerteeinheit (10) im optischen Sensor (1) integriert ist oder von einer externen Steuerung gebildet ist.

19. Sensoranordnung nach einem der Ansprüche 1 bis 18, **dadurch gekennzeichnet, dass** die Auswerteeinheit (10) einen fehlersicheren Aufbau aufweist.

20. Verfahren zum Betrieb einer Sensoranordnung mit einem optischen Sensor (1), welcher eine Lichtstrahlen (6) emittierende Sende-/Empfangseinheit (5) und eine Ablenkeinheit (9), welche zur Ablenkung der Lichtstrahlen (6) ausgebildet ist, aufweist und mit einer Auswerteeinheit (10), in welcher abhängig von mit der Sende-/Empfangseinheit (5) generierten Sensorsignalen Objektfeststellungssignale generiert werden, **dadurch gekennzeichnet, dass** die Sende-/Empfangseinheit (5) und die Ablenkeinheit (9) ausgebildet sind Lichtstrahlen (6) innerhalb mehrerer räumlich versetzter Abtastflächen (4a - 4d) zu führen, dass die Auswerteeinheit (10) für separate Objekterfassungen innerhalb der einzelnen Abtastflächen (4a - 4d) ausgebildet ist, wobei in der Auswerteeinheit (10) für eine Teilmenge der Abtastflächen (4a - 4d) eine sichere Auswertung durchgeführt wird und für die restlichen Abtastflächen (4a - 4d) eine nicht sichere Auswertung durchgeführt wird.
